## Europäisches Patentamt

## European Patent Office

## Office européen des brevets

(11) Veröffentlichungsnummer: **0 071 596**
**B1**

(12) **EUROPÄISCHE PATENTSCHRIFT**

(45) Veröffentlichungstag der Patentschrift:
20.11.86

(21) Anmeldenummer: 82890096.9

(22) Anmeldetag: 29.06.82

(51) Int. Cl.⁴: **F 16 H 3/08**

(54) Lastschaltgetriebe.

(30) Priorität: 31.07.81 AT 3382/81

(43) Veröffentlichungstag der Anmeldung:
09.02.83 Patentblatt 83/6

(45) Bekanntmachung des Hinweises auf die Patenterteilung:
20.11.86 Patentblatt 86/47

(84) Benannte Vertragsstaaten:
BE CH DE FR GB IT LI LU NL SE

(56) Entgegenhaltungen:
EP - A - 0 019 609
DE - A - 1 775 249
DE - C - 835 841
FR - A - 2 325 857
GB - A - 795 260

(73) Patentinhaber: EVG Entwicklungs- u. Verwertungs-Gesellschaft m.b.H., Vinzenz-Muchitsch-Strasse 36, A-8011 Graz (AT)

(72) Erfinder: **Gött, Hans, Dipl.-Ing.**, Petersbergenstrasse 69, A-8042 Graz (AT)
Erfinder: **Ritter, Josef, Dipl.-Ing. Dr.**, Stenggstrasse 33, A-8043 Graz (AT)
Erfinder: **Ritter, Gerhard, Dipl.-Ing. Dr.**, Unterer Plattenweg 47, A-8043 Graz (AT)
Erfinder: **Ritter, Klaus, Dipl.-Ing.**, Peterstalstrasse 157, A-8042 Graz (AT)

(74) Vertreter: **Holzer, Walter, Dipl.-Ing. et al, Patentanwälte Dipl.-Ing. Dr.techn. Schütz Alfred Dipl.-Ing. Dr.techn. Pfeifer Rudolf Dr.phil. Mrazek Engelbert Dipl.-Ing. Holzer Walter Dipl.-Ing. Pfeifer Otto, Fleischmanngasse 9 A-1040 Wien (AT)**

## Beschreibung

Die Erfindung betrifft ein Lastschaltgetriebe mit zwei Paaren aufeinander eingefluchteter, koaxialer und mittels einer Steuerung in axialer Richtung relativ zueinander verschiebbarer Wellen, an deren einander zugekehrten Enden je eine Kupplungsscheibe angeordnet ist und die mittels eines zwischen den beiden Paaren von Kupplungsscheiben frei verschiebbar und verdrehbar gelagerten zentralen Kupplungskörpers in verschiedenen Kombinationen miteinander kuppelbar sind.

Ein Getriebe dieser Gattung ist aus der EP-A 0 019 609 bekannt. Bei dem bekannten Getriebe befinden sich die mittels einer Steuerung relativ zueinander verschiebbaren und über den zentralen Kupplungskörper in verschiedenen Kombinationen kuppelbaren Wellen in einem Vorgelege, das über Zahnräder mit der Antriebs- und der Abtriebswelle des Getriebes in Verbindung steht. Infolgedessen verläuft bei jedem möglichen Übersetzungsverhältnis dieses Getriebes, also selbst dann, wenn die Antriebs- und die Abtriebswelle gleiche Drehzahl haben sollen, der Kraftfluss von der Antriebswelle zunächst zu einer Vorgelegewelle, dann über die Kupplung zu einer zweiten Vorgelegewelle und erst von dieser zur Abtriebswelle. Dieser Kraftfluss bedingt, dass in allen Gängen, insbesondere jedoch in den höheren Gängen, Getriebeverluste auftreten, die vermieden bzw. vermindert werden könnten, wenn eine direkte Verbindung zwischen Antriebs- und Abtriebswelle möglich wäre.

Die Erfindung befasst sich deshalb mit der Aufgabe, ein Schaltgetriebe der einleitend angegebenen Gattung so auszubilden, dass sich in einem Schaltzustand eine direkte Verbindung zwischen der Antriebs- und der Abtriebswelle ergibt, dabei aber zu vermeiden, dass abtriebseitig durch leer mitlaufende Getriebe-, insbesondere Vorgelegeteile ein hoher Geräuschpegel erzeugt wird und Verluste sowie ein unnötiger Verschleiss verursacht werden.

Diese Aufgabe wird erfindungsgemäss dadurch gelöst, dass das erste Paar koaxialer Wellen aus der Antriebswelle und einer diese umgebenden Hohlwelle besteht, wobei diese beiden koaxialen Wellen über je ein Zahnrad und ein Vorgelege in einem ersten, fest vorgegebenen Übersetzungsverhältnis miteinander verbunden sind, dass das zweite Paar koaxialer Wellen aus der Abtriebswelle und einer diese Welle umgebenden Hohlwelle besteht, wobei diese Hohlwelle über ein Zahnrad und ein weiteres Vorgelege mit einem abtriebseitigen Zahnrad in einem zweiten, fest vorgegebenen Übersetzungsverhältnis verbunden ist, und dass eine zweite, ebenfalls die Abtriebswelle koaxial umgebende Hohlwelle vorgesehen ist, die von dem abtriebsseitigen Zahnrad antreibbar und über eine einrückbare, vorzugsweise formschlüssige Kupplung mit der Abtriebswelle kuppelbar ist, wobei zwischen der zweiten Hohlwelle und dem abtriebseitigen Zahnrad ein Freilauf vorgesehen ist, mittels dessen die Abtriebswelle von dem abtriebseitigen Zahnrad nur im Sinne einer Vorwärtsdrehung antreibbar ist.

Bei einem derart aufgebauten Getriebe werden bei jenen Übersetzungsverhältnissen, bei welchen die Übertragung des Antriebsmomentes von dem frei verschiebbar und drehbar gelagerten zentralen Kupplungskörper unmittelbar auf die die Abtriebswelle antreibende Kupplungsscheibe erfolgt, insbesondere also auch im direkten Gang, die beiden die Abtriebswelle umgebenden Hohlwellen und das diese beiden Hohlwellen verbindende Vorgelege überhaupt nicht angetrieben, wodurch die inneren Verluste im Getriebe ebenso wie der Lärmpegel und der Verschleiss verringert werden.

Eine weitere Verbesserung ergibt sich, wenn zwischen der zweiten Hohlwelle und dem abtriebseitigen Zahnrad eine ein- und ausrückbare, den Freilauf überbrückende Reibungskupplung vorgesehen ist, weil es in diesem Falle zusätzlich möglich ist, den Motor zum Bremsen der Abtriebswelle zu nutzen.

Da das abtriebseitige Zahnrad nicht ständig mit der Abtriebswelle verbunden ist, ergibt sich u.a. die Möglichkeit, das Getriebe mit Rückwärtsgängen auszubilden. Zu diesem Zweck braucht nur die Abtriebswelle mittels einer einrückbaren, vorzugsweise formschlüssigen Kupplung alternativ auch mit einem zweiten abtriebseitigen Zahnrad kuppelbar sein, das mit einem die Drehrichtung umkehrenden Vorgelege in Eingriff steht.

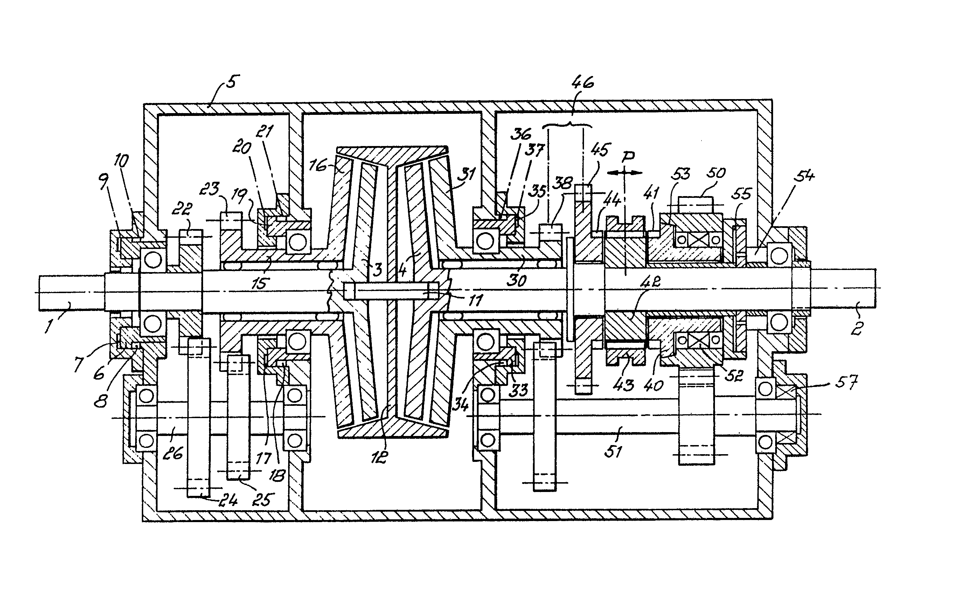

Die Erfindung wird nachfolgend unter Bezugnahme auf die Zeichnung genauer erläutert, die ein erfindungsgemässes Getriebe mit vier Vorwärtsgängen und zwei Rückwärtsgängen im Längsschnitt darstellt.

Gemäss der Zeichnung ist eine Antriebswelle 1 in einer Flucht mit einer Abtriebswelle 2 angeordnet. Mit dem freien Ende der Antriebswelle 1 ist eine Kupplungsscheibe 3 fest verbunden, und ebenso ist mit dem freien Ende der Abtriebswelle 2 eine Kupplungsscheibe 4 fest verbunden. In axialen Bohrungen an den einander zugekehrten Enden der Wellen 1 und 2 ist bezüglich beider Wellen axial verschiebbar ein Bolzen 11 gelagert, der einen zentralen Kupplungskörper 12 trägt.

Während die Abtriebswelle 2 im Getriebegehäuse 5 unverschiebbar gelagert ist, ist die Antriebswelle 1 im Getriebegehäuse 5 in ihrer Achsrichtung verschiebbar, wobei die Verschiebung mittels eines ringförmig ausgebildeten Kolbens 6 bewirkt wird. Zusammen mit entsprechend geformten Teilen des Getriebegehäuses 5 begrenzt der Kolben 6 zwei ringförmige Kammern 7, 8, die über nur angedeutete Leitungen 9, 10 mit Druckmittel versorgt werden können.

Die beiden die ringförmigen Kammern 7, 8 begrenzenden Flächen des Kolbens 6 sind unterschiedlich gross, und zwar ist die die Kammer 7 begrenzende Kolbenfläche grösser als jene, welche die Kammer 8 begrenzt. Bei gleichzeitiger Druckmittelbeaufschlagung beider Kammern 7, 8 wird daher die Antriebswelle 1 in Richtung zum zentralen Kupplungskörper 12 verschoben, bei Druckentlastung der Kammer 7 jedoch in entge-

gengesetzter Richtung bewegt. Die Axialbewegung der Antriebswelle 1 kann daher durch Änderung des Druckes allein in der Kammer 7 gesteuert werden.

Eine Hohlwelle 15, die an einem Ende eine Kupplungsscheibe 16 trägt, umgibt die Antriebswelle 1 koaxial und ist gegenüber dieser frei drehbar und in Achsrichtung frei verschiebbar gelagert. Mittels eines zweiten, ringförmige Kammern 17, 18 begrenzenden Kolbens 19 kann eine Axialverschiebung der Hohlwelle 15 bewirkt werden. In ihren Funktionen entsprechen die Kammern 17 und 18 den Kammern 7 bzw. 8, wobei die Kammern 17, 18 über nur angedeutete Leitungen 20, 21 mit Druckmittel versorgt werden können.

Auf der Antriebswelle 1 ist ein Zahnrad 22 drehfest angeordnet und ebenso ist auf der Hohlwelle 15 ein Zahnrad 23 drehfest befestigt. Die beiden Zahnräder 22, 23 stehen mit den Zahnrädern 24, 25 eines Vorgeleges 26 in dauerndem Eingriff, wodurch die beiden koaxialen Wellen 1 und 15 in einem ersten, fest vorgegebenen Übersetzungsverhältnis miteinander verbunden sind.

Die Abtriebswelle 2 ist koaxial von einer Hohlwelle 30 umgeben, die an einem Ende eine Kupplungsscheibe 31 trägt. Die Hohlwelle 30 ist bezüglich des zentralen Kupplungskörpers 12 spiegelbildlich zur Hohlwelle 15 gelagert und axial verschiebbar. Sie wirkt zu diesem Zweck in bereits erläuterter Weise mit einem ringförmigen Kolben 33 zusammen, der zwei Kammern 34, 35 voneinander trennt, welche über nur angedeutete Leitungen 36, 37 mit Druckmittel versorgt werden können. Die von Druckmittel beaufschlagte Querschnittfläche des Kolbens 33 in der Kammer 35 ist grösser als die druckmittelbeaufschlagten Kolbenquerschnittflächen in den Kammern 7 bzw. 17, um mit Sicherheit eine gleichzeitige Berührung der Kupplungsscheiben 4 und 31 mit dem zentralen Kupplungskörper 12 auszuschliessen. An dem von der Kupplungsscheibe 31 abgekehrten Ende der Hohlwelle 30 ist ein Zahnrad 38 drehfest angeordnet.

Eine zweite, ebenfalls die Abtriebswelle 2 koaxial umgebende Hohlwelle 40 trägt einen Zahnkranz 41. Auf einem drehfest mit der Abtriebswelle verbundenen Zahnrad 42 ist ein innenverzahnter Zahnkranz 43, z.B. mittels eines Steuerhebels oder durch einen mit Druckmittel beaufschlagbaren Kolben, in Achsrichtung der Abtriebswelle 2 im Sinne des Doppelpfeiles P verschiebbar, so dass er mit dem Zahnkranz 41 in Eingriff gebracht werden kann, um die Hohlwelle 40 starr mit der Abtriebswelle 2 zu verbinden. Bei Verschiebung in entgegengesetzter Richtung kommt der innenverzahnte Zahnkranz 43 mit einem Zahnkranz 44 an einem auf der Abtriebswelle 2 frei drehbar gelagerten Zahnrad 45 in Eingriff, welches über ein nur angedeutetes, die Drehrichtung umkehrendes Vorgelege 46 eine Antriebsverbindung im Sinne einer Rückwärtsdrehung der Abtriebswelle mit dem Zahnrad 38 herstellt.

Ein Zahnrad 50, das im dargestellten Ausführungsbeispiel die zweite Hohlwelle 40 koaxial umgibt, ist über ein Vorgelege 51 mit dem Zahnrad 38 in einem zweiten, fest vorgegebenen Übersetzungsverhältnis verbunden.

Zwischen der Hohlwelle 40 und dem Zahnrad 50 ist ein Freilauf 52 vorgesehen, der so ausgebildet ist, dass er bei Relativbewegung des Zahnrades 50 gegenüber der Hohlwelle 40 im Sinne einer Vorwärtsdrehung der Abtriebswelle 2 eine kraftschlüssige Verbindung zwischen dem Zahnrad 50 und der Hohlwelle 40 herstellt, bei gegensinniger Relativbewegung hingegen eine freie, voneinander unabhängige Beweglichkeit dieser beiden Teile sichert.

Nach einem vorteilhaften Merkmal ist das Zahnrad 50 relativ zur Hohlwelle 40 um einen geringen Betrag in Achsrichtung der Abtriebswelle 2 verschiebbar, und die Hohlwelle 40 sowie das Zahnrad 50 sind mit zusammenwirkenden Reibungskupplungsflächen 53 versehen. Die Axialverschiebung wird mittels eines über eine nur angedeutete Leitung 54 in eine Ringkammer eingeleiteten Druckmittels bewirkt. Nach Betätigung dieser den Freilauf 52 überbrückenden Kupplung kann die Abtriebswelle 2 mit dem Motor gebremst werden. Das Lösen der Kupplung erfolgt mittels nicht dargestellter Rückstellfedern.

Für alle Vorwärtsgänge wird zunächst der Zahnkranz 43 mit dem Zahnkranz 41 in Eingriff gebracht und dadurch das Zahnrad 50 mit der Abtriebswelle 2 gekuppelt. Es ergeben sich dann für die einzelnen Vorwärtsgänge die folgenden Steuervorgänge und Wirkverbindungen:

1. Gang: Die Kammern 17 und 35 werden über die Leitungen 20 bzw. 37 mit Druckmittel beauf-. schlagt. Die Hohlwellen 15 und 30 bewegen sich dabei gegensinnig längs der Antriebswelle 1 bzw. der Abtriebswelle 2 und die Kupplungsscheiben 16 und 31 werden kraftschlüssig mit dem frei verschiebbaren Kupplungskörper 12 verbunden. Der Kraftfluss geht dann von der Welle 1 über die das Vorgelege 26 enthaltenden Zahnräder 22-24-25-23, die Welle 15, die Kupplungsteile 16-12-31, die Hohlwelle 30, das Zahnrad 38, das Vorgelege 51, das Zahnrad 50, den Freilauf 52, die Hohlwelle 40, die Zahnkränze 41, 43 auf das Zahnrad 42 und damit auf die Abtriebswelle 2, hat also im wesentlichen den Verlauf: 1-22-26-23-15-16-12-31-38-51-50-52-40-41-43-42-2.

2. Gang: Die Kammern 9 und 35 werden mit Druckmittel beaufschlagt, wodurch die Kupplungsteile 3-12-31 kraftschlüssig verbunden werden und sich der Kraftfluss 1-3-12-31-38-51-50-52-40-41-43-42-2 ergibt.

3. Gang: Die Kammer 17 wird mit Druckmittel beaufschlagt, wodurch die Kupplungsscheibe 3 den frei verschiebbaren Kupplungskörper 12 gegen die feststehende Kupplungsscheibe 4 an der Welle 2 drückt und sich der Kraftfluss 1-22-26-23-15-16-12-4-2 ergibt.

Da bei dieser Wirkverbindung die Abtriebswelle 2 unmittelbar im Sinne einer Vorwärtsdrehung angetrieben wird, wird im Freilauf 52 die Verbindung zwischen der Hohlwelle 40 und dem Zahnrad 50 gelöst und die Teile 31-30-38-51-50 bleiben in Ruhe.

4. Gang: Die Kammer 9 wird mit Druckmittel beaufschlagt, wodurch die Kupplungsscheibe 3 den frei beweglichen Kupplungskörper 12 kraftschlüssig mit der Kupplungsscheibe 4 verbindet und sich im Direktgang der Kraftfluss 1-3-12-4-2 ergibt. Der Freilauf wirkt gleich wie im 3. Gang.

Beim dargestellten bevorzugten Ausführungsbeispiel kann das Getriebe noch mit zwei Rückwärtsgängen angetrieben werden, wenn die Zahnkränze 43 und 44 miteinander in Eingriff gebracht werden. Wird die links der Kupplung liegende Getriebeseite dabei wie im 1. Gang geschaltet, so erfolgt der Abtrieb über das Zahnrad 38, das nur angedeutete, die Drehrichtung umkehrende Vorgelege 46 und das Zahnrad 45 langsam in einem ersten Rückwärtsgang, bei Schaltung der linken Getriebeseite wie im 2. Gang erfolgt der Abtrieb über die gleichen Teile auf der rechten Getriebeseite schneller mit einem zweiten Rückwärtsgang.

Der frei verschiebbar und verdrehbar gelagerte zentrale Kupplungskörper 12 kann Scheibenform haben, wird aber vorzugsweise gemäss Zeichnung mit doppelseitig konischen Kupplungsflächen ausgebildet, um die peripheren Kupplungsflächen der Kupplungsscheiben 3, 4, 16 und 31 in annähernd gleichem Abstand von den Wellen 1 und 2 anordnen und dadurch die bei der Kraftübertragung auftretenden Reibungskräfte an allen Kupplungsflächen annähernd gleich gross halten zu können.

Bei Verwendung des Getriebes in Kraftfahrzeugen ist es zur Verhinderung eines Wegrollens des Fahrzeuges auf einer Steigung bei Leerlauf des Getriebes vorteilhaft, an der Welle des Vorgeleges 51 eine Rücklaufsperre 57 vorzusehen, die wie ein Freilauf ein Drehen der Welle des Vorgeleges 51 nur in einer Richtung gestattet. Stehen beispielsweise die Zahnkränze 41 und 43 in Eingriff und wird gleichzeitig keine der Kammern 7, 17, 35 mit Druckmittel beaufschlagt, dann ist keiner der Kupplungsteile 3, 4, 12, 16, 31 mit dem anderen in Berührung und das Getriebe daher auf Leerlauf geschaltet. Hätte nun das Fahrzeug die Tendenz, nach hinten zu rollen, so würde die Welle 51 entgegen ihrer normalen Antriebsrichtung gedreht, die Rücklaufsperre würde einrasten und die Drehung verhindern. Das Fahrzeug könnte also nicht zurückrollen. Gleiches träte ein, wenn die Zahnkränze 43 und 44 in Eingriff wären; in diesem Falle könnte das Fahrzeug nicht nach vorne rollen. Die Rücklaufsperre verhindert daher je nach Stellung des Zahnkranzes 43 ein Wegrollen des auf einer Steigung geparkten Fahrzeuges.

## Patentansprüche

1. Lastschaltgetriebe mit zwei Paaren aufeinander eingefluchteter, koaxialer und mittels einer Steuerung in axialer Richtung relativ zueinander verschiebbarer Wellen (1, 15 bzw. 2, 30), an deren einander zugekehrten Enden je eine Kupplungsscheibe (3, 16 bzw. 4, 31) angeordnet ist und die mittels eines zwischen den beiden Paaren von Kupplungsscheiben frei verschiebbar und drehbar gelagerten zentralen Kupplungskörpers (12) in verschiedenen Kombinationen miteinander kuppelbar sind, dadurch gekennzeichnet, dass das erste Paar koaxialer Wellen aus der Antriebswelle (1) und einer diese umgebenden Hohlwelle (15) besteht, wobei diese beiden koaxialen Wellen (1, 15) über je ein Zahnrad (22, 23) und ein Vorgelege (26) in einem ersten, fest vorgegebenen Übersetzungsverhältnis miteinander verbunden sind, dass das zweite Paar koaxialer Wellen aus der Abtriebswelle (2) und einer diese Welle umgebenden Hohlwelle (30) besteht, wobei diese Hohlwelle (30) über ein Zahnrad (38) und ein weiteres Vorgelege (51) mit einem abtriebsseitigen Zahnrad (50) in einem zweiten, fest vorgegebenen Übersetzungsverhältnis verbunden ist, und dass eine zweite, ebenfalls die Abtriebswelle (2) koaxial umgebende Hohlwelle (40) vorgesehen ist, die von dem abtriebsseitigen Zahnrad (50) antreibbar und über eine einrückbare, vorzugsweise formschlüssige Kupplung (41-43) mit der Abtriebswelle (2) kuppelbar ist, wobei zwischen der zweiten Hohlwelle (40) und dem abtriebsseitigen Zahnrad (50) ein Freilauf (52) vorgesehen ist, mittels dessen die Abtriebswelle (2) von dem abtriebsseitigen Zahnrad (50) nur im Sinne einer Vorwärtsdrehung antreibbar ist.

2. Lastschaltgetriebe nach Anspruch 1, dadurch gekennzeichnet, dass die Abtriebswelle (2) mittels einer einrückbaren, vorzugsweise formschlüssigen Kupplung (41-44) alternativ auch mit einem zweiten abtriebsseitigen Zahnrad (45) kuppelbar ist, das mit einem die Drehrichtung umkehrenden Vorgelege (46) in Eingriff steht.

3. Lastschaltgetriebe nach Anspruch 1 oder 2, dadurch gekennzeichnet, dass zwischen der zweiten Hohlwelle (40) und dem abtriebsseitigen Zahnrad (50) eine ein- und ausrückbare, den Freilauf (52) überbrückende Reibungskupplung (53) vorgesehen ist.

4. Lastschaltgetriebe nach einem der Ansprüche 1 bis 3, dadurch gekennzeichnet, dass das mit der Abtriebswelle (2) kuppelbare Vorgelege (51) mit einer Rücklaufsperre (57) ausgestattet ist.

## Claims

1. A power shift transmission having two pairs of coaxial shafts (1, 15 and 2, 30, respectively) which are aligned with one another and displaceable relatively to one another in the axial direction by control means, a coupling disc (3, 16 and 4, 31, respectively) arranged upon each of the adjacent shaft ends, which shafts can be coupled in selectable combinations by means of a central coupling body (12) supported freely displaceable and rotatable between said two pairs of coupling discs, characterized in that the first pair of coaxial shafts consists of a driving shaft (1) and a hollow shaft (15) surrounding said driving shaft, said first pair of coaxial shafts (1, 15) being connected together via a gear wheel (22, 23) on each of said first pair of coaxial shafts and a back gear (26) in a first predetermined fixed transmission ratio, in that said second pair of coaxial shafts consist of a driven shaft (2) and a hollow shaft (30) surrounding said driven shaft, said second hollow shaft (30) being connected via a gear wheel (38) and a further back gear (51) with a driven gear wheel (50) in a second predetermined fixed transmission ratio, and in that there is provided a second hollow shaft (40) also coaxially surrounding said driven shaft (2), which second hollow shaft (40) is adapted to be driven by said driven gear wheel (50) and is adapted to be coupled by an engageable, preferably positively engageable coupling (41–43) with said driven shaft (2), a free wheel (52) being provided between said second hollow shaft (40) and said driven wheel (50), said driven shaft (2) being adapted to be driven by said driven wheel (30) only in a forward sense of rotation.

2. Power shift transmission according to claim 1, characterized in that said driven shaft (2) is adapted to be coupled alternatively also with a second driven wheel (45) by means of an engageable, preferably positively engageable coupling (41–44), said second driven wheel (45) engaging a back gear (46) which reverses the direction of rotation.

3. Power shift transmission according to claim 1 or 2, characterized in that between said second hollow shaft (40) and said driven gear wheel (50), there is provided a friction coupling (53) which overrides said free wheel (52) and is adapted to be engaged and disengaged.

4. Power shift transmission according to one of the claims 1 to 3, characterized in that said back gear (51) adapted to be coupled to said driven wheel (2) is provided with a sprag (57) blocking reverse sense of rotation thereof.

**Revendications**

1. Boîte de vitesses commandée en charge comportant deux paires d'arbres (1, 15 et 2, 30) disposées coaxialement en ligne et pouvant être déplacées l'une par rapport à l'autre dans le sens axial au moyen d'une commande, ces arbres portant chacun un disque d'embrayage (3, 16 et 4, 31) sur leurs extrémités tournées l'une vers l'autre et pouvant être accouplés en diverses combinaisons au moyen d'un corps d'embrayage central (12) monté de manière à pouvoir se déplacer et tourner librement entre les deux paires de disques d'embrayage, caractérisée en ce que la première paire d'arbres coaxiaux comprend l'arbre moteur (1) et un arbre creux (15) qui l'entoure, ces deux arbres coaxiaux (1, 15) étant reliés l'un à l'autre par l'intermédiaire chaque fois d'un pignon (22, 23) et d'un train intermédiaire (26) dans un premier rapport de transmission fixe prédéfini, la seconde paire d'arbres coaxiaux comprend l'arbre de sortie (2) et un arbre creux (30) qui l'entoure, cet arbre creux (30) étant relié par l'intermédiaire d'un pignon (38) et d'un autre train intermédiaire (51) à un pignon (50) situé du côté de sortie dans un second rapport de transmission fixe prédéfini et un second arbre creux (40) entourant également l'arbre de sortie (2) coaxialement est prévu, peut être entraîné à partir du pignon (50) situé du côté de sortie et peut être accouplé par l'intermédiaire d'un accouplement embrayable, de préférence par épousement de formes (41 à 43) à l'arbre de sortie (2), étant entendu qu'entre le second arbre creux (40) et le pignon (50) situé du côté de sortie est prévu un accouplement à roue libre (52) au moyen duquel l'arbre de sortie (2) ne peut être entraîné par le pignon (50) situé du côté de sortie que dans le sens d'une rotation en marche avant.

2. Boîte de vitesses commandée en charge suivant la revendication 1, caractérisée en ce que l'arbre de sortie (2) peut être accouplé au moyen d'un accouplement embrayable, de préférence à épousement de formes (41 à 44), alternativement aussi à un second pignon (45) situé du côté de sortie qui est en prise avec un train intermédiaire (46) inversant le sens de rotation.

3. Boîte de vitesses commandée en charge suivant la revendication 1 ou 2, caractérisée en ce qu'entre le second arbre creux (40) et le pignon (50) situé du côté de sortie est prévu un accouplement à friction (53) embrayable et débrayable qui supplante l'accouplement à roue libre (52).

4. Boîte de vitesses commandée en charge suivant l'une quelconque des revendications 1 à 3, caractérisée en ce que le train intermédiaire (51) pouvant être accouplé à l'arbre de sortie (2) est équipé d'un cliquet de retour (57).